# EUROPEAN PATENT SPECIFICATION

(11) **EP 1 242 515 B1**
(45) Date of publication and mention of the grant of the patent: **24.11.2004**
(21) Application number: 00977772.3
(22) Date of filing: 01.12.2000
(51) Int. Cl.: C08J 7/00, C08J 7/12

(54) **SURFACE TREATMENT OF AN ORGANIC POLYMERIC MATERIAL**
OBERFLÄCHENBEHANDLUNG EINES ORGANISCHEN POLYMEREN MATERIALS
TRAITEMENT DE SURFACE D'UN MATERIAU POLYMERE ORGANIQUE

(30) Priority: 02.12.1999 GB 9928781
(43) Date of publication of application: 25.09.2002
(73) Proprietor: Dow Corning Ireland Limited, Midleton, County Cork (IE)
(72) Inventor: GOODWIN, Andrew James, Pontrennau, Cardiff CF23 8PP (GB); FUTTER, Daniel Edward, 1050 Ixelles (BE); MERLIN, Patrick Jacques Jean, 7063 Neufvilles (BE); BADYAL, Jas Pal Singh, Wolsingham, County Durham DL1 3LE (GB)
(74) Representative: Donlan, Andrew Michael
(86) International application number: PCT/GB2000/004603
(87) International publication number: WO 2001/040359

(56) References cited:
- US-A- 5 693 928
- DATABASE WPI Week 0013 Derwent Publications Ltd., London, GB; AN 2000-142666 XP002160532 & JP 2000 007845 A (NIPPON UNICAR CO LTD), 11 January 2000 (2000-01-11)
- DATABASE WPI Week 0013 Derwent Publications Ltd., London, GB; AN 2000-142668 XP002160533 & JP 2000 007848 A (NIPPON UNICAR CO LTD), 11 January 2000 (2000-01-11)

## Description

The present invention relates to a method of forming a coating comprising silicon oxides on a substrate surface by incorporating organosilicon-containing additives in the substrate and plasma treating the substrate surface.

The use of plasma treatment techniques to modify substrate surfaces is well known; in general, a substrate is treated by placing it within a reactor vessel and subjecting it to a plasma discharge. The effect on the surface depends largely upon the gaseous material present within the reactor during the plasma discharge. For example, plasma treatment may activate species on the substrate surface which augment adhesion of the substrate with other materials, or deposition of materials onto the substrate surface. Plasma treatment of siloxane substrates results in formation of silicon oxides, hereinafter defined as "SiOₓ", on the surface of the siloxane. SiOₓ coated substrates are desirable because the SiOₓ may, for example, provide a barrier to permeation of gases, vapours, odours, etc, into the substrate, and may augment adhesion of the substrate with or to other materials.

When two materials are blended together they will segregate if their respective surface energies are sufficiently different and according to their miscibility. The material having the lower surface energy will migrate to the surface of the material having the higher surface energy, and non-miscibility of the materials will enhance segregation. Two classes of materials which have sufficiently different surface energies to result in segregation when blended together are organic polymers and siloxanes. Siloxanes have a surface energy sufficiently lower than most organic polymers to result in migration of the siloxane to the surface of the organic polymer with which it is blended. Thus, a method of forming an SiOₓ layer on an organic polymeric substrate is to blend the substrate with a siloxane, allow the siloxane to migrate to the substrate surface, and then plasma treat the substrate surface. The incorporation of polysiloxanes into organic polymers is described in, for example, GB patent number 1257304.

In Polym. Mater. Sci. Eng. 1988, 59 (934-940), Arnold et al disclose polyimide-polydimethylsiloxane copolymers suitable for use in space flight applications. Where the copolymers are exposed to aggressive oxygen environments, such as low earth orbit atmospheres, a ceramic-like silicate protective layer is formed on the surface of the copolymer. US Patent Number 5,693,928 discloses a method of forming a diffusion barrier on an article made from a polymer blend of a high surface energy polymer and an excess of a low surface energy material, for example a silane or siloxane, characterised by the high level of miscibility of the constituents. The article is treated with reactive oxygen (ozone) and UV radiation to form the diffusion barrier.

We have found an improved method of plasma treatment of a substrate surface wherein the substrate contains organosilicon-containing additives to form a coating on the surface which comprises SiOₓ groups. Such SiOₓ containing coatings can provide enhanced barrier, antioxidant and adhesive properties to the substrate surface.

According to the present invention there is provided A method of forming a coating on a substrate surface which coating comprises SiOₓ groups by plasma treatment of the surface, wherein the substrate comprises a blend of an organic polymeric material and 25% by weight or less of an organosilicon-containing additive which is substantially non-miscible with the organic polymeric material; which organosilicon-containing additive comprises resins, linear siloxanes of the formula R¹ₐR₃₋ₐSiO-(R¹_{b}R₂₋ _{b}SiO)_{c}-SiR₃₋ₐR¹ₐ and cyclic siloxanes of the formula (R¹_{b}R₂₋ _{b}SiO)_{d} wherein each R is independently selected from alkyl groups and substituted hydrocarbon groups selected from aminoalkyl, epoxyalkyl, (meth)acryloxyalkyl, isocyanoalkyl, trifluoroalkyl, and perfluoroalkyl groups, R¹ is an alkyl group, a hydrogen atom, an alkenyl group, or a hydroxyl group *a* is 0 to 3, *b* is 0 to 2, *c* is zero or an integer, and *d* is 3 to 10.

Herein "substantially non-miscible" means that the organosilicon-containing additive and the organic material have sufficiently different interaction parameters so as to be non-miscible in equilibrium conditions. This will typically, but not exclusively, be the case when the Solubility Parameters of the organosilicon-containing additive and the organic material differ by more than 0.5 MPa^{1/2}. For example, in the case of a homopolymer organosilicon-containing additive in an organic polymeric material this can result in micro phase separation (1-20µm), and in the case of a copolymer organosilicon-containing additive in an organic polymeric material this can result in nano phase separation (10-50nm).

The substrates used in the method of the present invention comprise a blend of an organic polymeric material and an organosilicon-containing additive which is substantially non-miscible with the organic polymeric material. Suitable organic materials include polycarbonates, polyurethanes, polyolefins (for example polypropylenes and polyethylenes), polyvinylchloride, polyesters (for example polyalkylene terephthalates), polymethacrylates (for example polymethylmethacrylate and polymers of hydroxyethylmethacrylate), polyepoxides, polysulphones, polyphenylenes, polyetherketones, polyimides, polyamides, polystyrenes, phenolic, epoxy and melamine-formaldehyde resins, and blends and copolymers thereof. Preferred organic polymeric materials are polyolefins, in particular polyethylene and polypropylene.

The organosilicon-containing additives in accordance with the present invention may be, for example, resins and fluids, gums comprising linear siloxanes of the formula R¹ₐR₃₋ₐSiO-(R¹_{b}R_{2-b}SiO)_{c}-SiR₃₋ₐR¹ₐ and cyclic siloxanes of the formula (R¹_{b}R_{2-b}SiO)_{d} wherein each R is independently selected from alkyl groups, e.g. methyl, ethyl, propyl, butyl, pentyl, hexyl, heptyl, octyl groups and isomers thereof, preferably methyl, and substituted hydrocarbon groups selected from aminoalkyl, epoxyalkyl, (meth)acryloxyalkyl, isocyanoalkyl, trifluoroalkyl, e.g. trifluoropropyl), and perfluoroalkyl, (e.g. perfluorobutylethyl) groups; R¹ is an alkyl group, a hydrogen atom, an alkenyl group, preferably vinyl or a hydroxyl group *a* is 0 to 3, *b* is 0 to 2, *c* is zero or an integer for example an integer between 10 and 10⁵, preferably between 100 and 10,000,, and *d* is 3 to 10, preferably 4 to 6. Particularly preferred siloxanes are polydimethylsiloxane, α,ω-dihydroxy-polydimethylsiloxane and α,ω-divinylpolydimethylsiloxane. Suitable organosilicon-containing resins for use in the method of the present invention include polysilsesquioxane resins.

Suitable organosilicon-containing additives for use in the method of the present invention also include copolymers of siloxanes and organic polymers. Suitable copolymers include A-B-A, B-A-B, A-B, (A-B)ₙ and A-graft-B copolymers, wherein A is the organic polymer, B is the siloxane, and n is a positive integer. Preferred copolymers include copolymers of polyethylene and polypropylene with polydimethylsiloxane.

The organosilicon-containing additive must be present in the substrate in an amount sufficient to form a SiOₓ coating on the substrate surface following plasma treatment. An amount of organosilicon-containing additive of 25% by weight or less, preferably 10% by weight or less, for example from 2.5 to 5% by weight is used. N.B. where the additive comprises organosilicon-containing and non-organosilicon-containing components, for example as in the case of a copolymer of organic polymer and siloxane, the stated percentages are for the organosilicon-containing component alone.

The specific organic polymeric material and organosilicon-containing additives to be employed for a particular substrate will depend on the use to which the substrate is to be put. For example, we have found that plasma treated substrates in which the organosilicon-containing additive is a high molecular weight siloxane gum tend to have useful adhesive properties, whereas plasma treated substrates in which the organosilicon-containing additive is a low molecular weight siloxane fluid or copolymer tend to promote formation of a thicker SiOₓ coating, which may enhance surface barrier properties. In general, substantially all blends of organic polymeric materials and organosilicon-containing additives which are non-miscible therewith are usable in the method of the present invention and result in the formation of SiOₓ on the substrate surface.

The substrate for use in the method of the present invention may be prepared by mixing the organosilicon-containing additive with the organic polymeric material. Mixing may be achieved by any means conventional in the art for such procedures. For example, the organic polymeric material may be obtained in the form of pellets which can be added to a hopper which feeds into apparatus for processing the pellets and forming the substrate, for example an extruder. When using an extruder, the organosilicon-containing additive may be sprayed onto the pellets in the hopper, or alternatively may be added to the extruder itself via an entry port. The pellets are melted in the extruder, wherein the organosilicon-containing additive mixes with the organic polymeric material melt. It is during the melt process that the organosilicon-containing additive migrates to the surface of the substrate. The substrate may then be formed downstream, e.g. by film blowing or casting, blow moulding, injection moulding, injection blow moulding, sheet extrusion, cable sheathing, fibre extrusion, profile extrusion, formation into pellets or foams, and such other means as are conventional in the art. The substrate may itself form a coating on a substrate, for example a coating on a metal article. Pellets of the organic polymeric material may be pre-prepared, e.g. pellets of organic polymeric material already containing organosilicon-containing additive may be prepared for future use. These pellets may then be used as is conventional in the art for forming the substrate without the need for the additional step of mixing the organosilicon-containing additive therewith.

According to the method of the present invention, once the substrate has been formed the surface thereof is plasma treated. Many different plasma treatment processes are known, and any plasma oxidative treatment process which can convert the organosilicon-containing additive on the substrate surface to SiOₓ is suitable for use in the method of the present invention. Suitable plasma oxidative treatment processes include, for example, d.c., low frequency, high frequency, microwave, ECR, corona, dielectric barrier, ozone and atmospheric glow discharge treatment processes. The gas for use in the plasma treatment process may be, for example, an oxygen-containing gas, e.g. O₂ H₂O, NO₂, and air, or an inert gas; however, when the latter is used in plasma treatment processes etching of the substrate surface may also occur and hence oxygen-containing gasses, in particular O₂ and air, are preferred. Gas pressure may be atmospheric pressure or lower, for example, from 10Nm⁻² to 1000Nm⁻².

The duration of the plasma treatment will depend upon the particular substrate in question and the desired degree of conversion of organosilicon compound on the surface of the substrate to SiOₓ, and this will typically be the order of seconds.

Plasma treatment of the substrate surface may be performed with substrate heating and/or pulsing of the plasma discharge. The substrate may be heated to a temperature up to and below its melting point. Substrate heating and plasma treatment may be cyclic, i.e. the substrate is plasma treated with no heating, followed by heating with no plasma treatment, etc., or may be simultaneous, i.e. substrate heating and plasma treatment occur together. A particularly preferred plasma treatment process involves pulsing the plasma discharge with constant heating of the substrate. The plasma discharge is pulsed to have a particular "on" time and "off" time. The on-time is typically from 10 to 10000µs, preferably 100 to 1000µs, and the off-time typically from 1000 to 10000µs, preferably from 1000 to 2000µs.

Surface plasma treatment of a substrate comprising an organic polymeric material which contains an organosilicon-containing additive as described herein can improve the surface barrier, antioxidant and/or the adhesive properties of the substrate surface. For example, plasma surface treatment can facilitate further modification of the substrate surface, for example modification by the introduction of additional functionalities onto the substrate surface by grafting of materials containing such additional functionalities (e.g. chlorosilanes, alkoxysilanes, and titanates), thereonto. Adhesive properties of the substrate surface can also be enhanced, for example by providing enhanced adhesion of coatings and laminates thereto and by providing improved paintability and/or printability. Improved adhesion of the coating to the substrate surface may also impart useful release properties to the substrate, for example to enable the coated substrate to be used as a release liner, such as for self-adhesive labels.

The present invention will now be described in detail by way of example.

### Example 1

Polyethylene substrates containing 2.5%w/w polydimethylsiloxane (PDMS) (as A₃₀B₃₀A₃₀ PDMS-co-ethylene copolymer) were prepared as films using a thin film extruder. Strips of the substrate were ultrasonically washed in a solvent mixture of 1:1 cyclohexane/propan-2-ol for 30 seconds. Two sets of low pressure plasma treatments were then performed on the strips:

In the first set, the washed strip was annealed in a vacuum oven at 80°C for 30 minutes prior to placing in the plasma chamber where no further heating took place.

In the second set, the washed sample was placed directly into the plasma chamber and heated at 80°C during 60 seconds pulsed plasma treatment (20W forward power, reflected power varying between 3W and 5W).

Elemental analysis of the near surface region (3-5nm) of each substrate was performed to ascertain the levels of SiOₓ on the substrate surface using X-ray photoelectron spectroscopy (XPS).
Results are shown in Table 1 below.

**Table 1**

| Treatment | %C | %O | %Si | | | |
|---|---|---|---|---|---|---|
| | | | SiO_{2/2} | SiO_{3/2} | SiO_{4/2} | Total |
| none | 71.3 | 15.5 | 13.2 | - | - | 13.2 |
| washed (1) | 92.5 | 4.3 | 3.2 | - | - | 3.2 |
| washed and annealed (2) | 63.7 | 18.2 | 18.1 | - | - | 18.1 |
| (2) + 2W O₂ plasma | 31.7 | 49.3 | 2.7 | 9.1 | 7.2 | 19.0 |
| (1) + 2W O₂ plasma + heating | 47.6 | 31.4 | 7.8 | 6.0 | 7.3 | 21.1 |
| (1) + 2W O₂ pulsed plasma* | 35.5 | 46.3 | 3.7 | 8.3 | 6.1 | 18.1 |
| (2) + 2W O₂ pulsed plasma* + heating | 26.1 | 52.6 | 0.9 | 8.6 | 11.9 | 21.4 |

| | | | | | | |
|---|---|---|---|---|---|---|
| * on-time = 120µs, off-time = 1360µs | | | | | | |

### Example 2

Polyethylene substrates containing 2.5% w/w α,ω-divinyl PDMS (Mw ca. 500000) were prepared as films using a thin film extruder and washed as described in Example 1.

Film samples were then low pressure plasma treated (with the exception of treatment (i)) as follows:
(i) solvent washed, then heated at 80°C for 30 mins;
(ii) 2W O₂ plasma treatment for 60 seconds;
(iii) 2W O₂ plasma treatment for 60 seconds, followed by washing in 50/50 cyclohexane/propan-2-ol solvent mixture for 30 seconds;
(iv) 2W O₂ plasma treatment for 60 seconds followed by annealing at 80°C for 30 mins; and
(v) 2W O₂ plasma treatment for 60 seconds followed by annealing at 80°C for 30 mins, and then washing in 50/50 cyclohexane/propan-2-ol solvent mixture for 30 seconds.

Elemental analysis of the near surface region (3-5nm) of each substrate was performed to ascertain the levels of SiOₓ on the substrate surface using X-ray photoelectron spectroscopy (XPS).
Results are shown in Table 2 below.

**Table 2**

| | Si Atom % by XPS | | | |
|---|---|---|---|---|
| Treatment | Si as PDMS | Error ± | Si as SiOₓ | Error ± |
| i) | 6.7 | 0.6 | 0 | 0 |
| ii) | 0 | 0 | 4.4 | 0.6 |
| iii) | 0.7 | 0.08 | 4.9 | 0.53 |
| iv) | 5.5 | 0.35 | 3.7 | 0.25 |
| v) | 2.6 | 0.23 | 4.2 | 0.37 |

### Example 3

Polypropylene substrates containing 2.5% w/w α,ω-divinyl PDMS (Mw ca. 500000) were prepared as films using a thin film extruder and washed as described in Example 1.

Film samples were then low pressure plasma treated (with the exception of treatment (i)) as follows:
(i) solvent washed and then heated at 80°C for 30 mins;
(ii) 2W O₂ plasma treatment for 60 seconds;
(iii) 2W O₂ plasma treatment for 60 seconds followed by washing in 50/50 cyclohexane/propan-2-ol solvent mixture for 30 seconds;
(iv) 2W O₂ plasma treatment for 60 seconds followed by annealing at 80°C for 30 mins; and
(v) 2W O₂ plasma treatment for 60 seconds followed by annealing at 80°C for 30 mins and then washing in 50/50 cyclohexane/propan-2-ol solvent mixture for 30s.

Elemental analysis of the near surface region (3-5nm) of each substrate was performed to ascertain the levels of SiOₓ on the substrate surface using X-ray photoelectron spectroscopy (XPS).
Results are shown in Table 3 below.

**Table 3**

| | Si Atom % by XPS | | | |
|---|---|---|---|---|
| Treatment | Si as PDMS | Error ± | Si as SiOx | Error ± |
| i) | 2.7 | 0.68 | 0.1 | 0.03 |
| ii) | 0.5 | 0.07 | 3.5 | 0.53 |
| iii) | 0.7 | 0.11 | 3.1 | 0.49 |
| iv) | 3.7 | 0.38 | 2.1 | 0.22 |
| v) | 0.7 | 0.08 | 3.9 | 0.52 |

### Example 4

Polyethylene substrates containing 2.5% w/w polydimethylsiloxane (PDMS) (as A₃₀B₃₀A₃₀ PDMS-co-ethylene copolymer) were prepared as films using a thin film extruder. Strips of the substrate were ultrasonically washed in a solvent mixture of 1:1 cyclohexane/propan-2-ol for 30 seconds. The washed film was annealed in a vacuum oven at 80°C for 30 minutes prior to placing into gas discharge equipment where no further heating took place.

The films were then subjected to an oxygen containing atmospheric pressure glow discharge (APGD). Elemental analysis of the near surface region (3-5nm) of each substrate was performed to ascertain the levels of SiOₓ on the substrate surface using X-ray photoelectron spectroscopy (XPS).
Results are shown in Table 4 below.

**Table 4**

| | XPS (atom%) | | | |
|---|---|---|---|---|
| Treatment | C | O | Si | SiOₓ |
| Washed & annealed | 60.2 ± 2.9 | 20.7 ± 2.4 | 19.2 ± 0.6 | none |
| Washed & annealed + APGD | 26.5 ± 0.5 | 51.1 ± 0.3 | 22.4 ± 0.2 | 55.6 ± 1.7 |

### Example 5

Polyethylene substrates containing 2.5% w/w α,ω-dihydroxy PDMS were prepared as films using a thin film extruder and washed as described in Example 1.

Substrate strips were then subjected to 60 seconds pulsed plasma treatment (20W forward power, reflected power varying between 3W and 5W, on-time = 120µs, off-time = 13-60µs) with heating at 80°C.

The adhesion performance of each strip was determined according to FINAT test method 3 (Low Speed Release Force).
The results are also shown in Table 5 below:

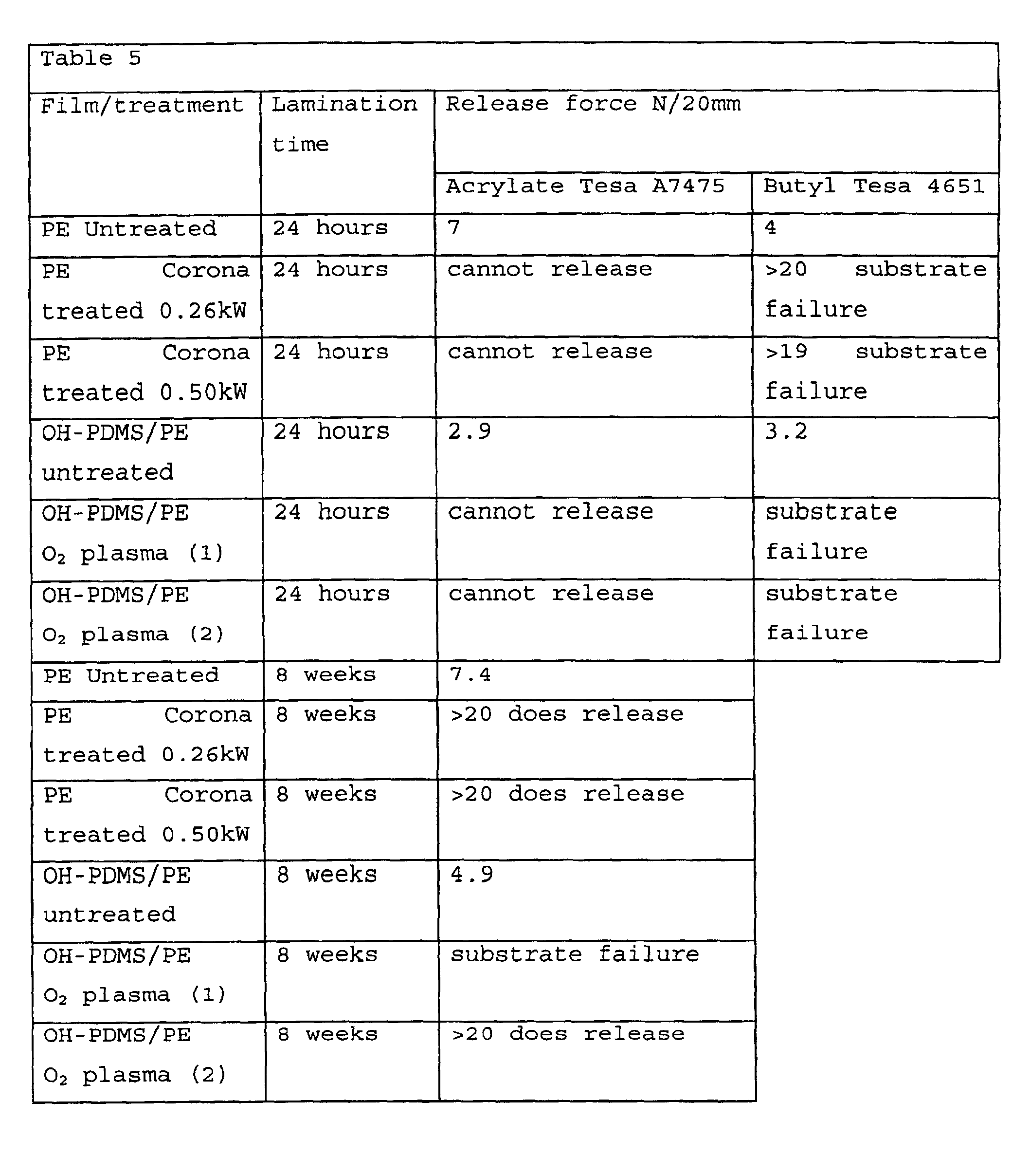

### Example 6

Polyethylene substrates containing 2.5% w/w α,ω- divinyl PDMS were prepared using a thin film extruder. Polyethylene substrates not containing any α,ω- divinyl PDMS were also prepared for comparision. All the substrate strips were then subjected to 10 minutes O₂ plasma treatment (O₂ pressure = 27 Nm⁻², peak power =25W, on-time =100 msecs, off-time =1000 msecs), with the substrate temperature maintained at 47°C.

After 4 days the substrates were coated with a commercial solventless silicone coating formulation which comprises methylvinyl functional siloxane polymer, methylhydrogen functional siloxane crosslinker, platinum based catalyst and an inhibitor. Silicone coatings of ca. 1µm thickness were prepared and cured by heating at 80°C for 180 seconds.

The anchorage of the silicone coating to the polyethylene substrate was tested over time by subjecting it to abrasive treatment and comparing the weight of the silicone coating after treatment with the weight prior to treatment (quantified by XRF analysis).

The anchorage index is (coating weight after abrasive treatment)/(initial coating weight) x 100%. An anchorage index of 95% or greater is considered acceptable.
The results are given in Table 6 below.

**Table 6**

| Time after coating | Polyethylene film | Polyethylene + PDMS |
|---|---|---|
| Immediate | 99 | 95 |
| 1 day | 100 | 99 |
| 7 days | 85 | 98 |
| 14 days | 79 | 99 |
| 28 days | 92 | 98 |
| 56 days | 73 | 97 |

## Claims

1. A method of forming a coating on a substrate surface which coating comprises SiOₓ groups by plasma treatment of the surface, wherein the substrate comprises a blend of an organic polymeric material and 25% by weight or less of an organosilicon-containing additive which is substantially non-miscible with the organic polymeric material; which organosilicon-containing additive comprises copolymers of siloxanes and organic polymers, resins, linear siloxanes of the formula R¹ₐR₃₋ₐSiO-(R¹_{b}R_{2-b}SiO)_{c}-SiR₃₋ₐR¹ₐ and cyclic siloxanes of the formula (R¹_{b}R₂₋ _{b}SiO)_{d} wherein each R is independently selected from alkyl groups and substituted hydrocarbon groups selected from aminoalkyl, epoxyalkyl, (meth)acryloxyalkyl, isocyanoalkyl, trifluoroalkyl, and perfluoroalkyl groups, R¹ is an alkyl group, a hydrogen atom, an alkenyl group, or a hydroxyl group *a* is 0 to 3, *b* is 0 to 2, *c* is zero or an integer, and *d* is 3 to 10.

2. A method according to Claim 1 wherein the organic polymeric material comprises a polyolefin.

3. A method according to Claim 1 or 2 wherein the organosilicon-containing additive comprises polydimethylsiloxane, α,ω-dihydroxypolydimethylsiloxane, α,ω-divinylpolydimethylsiloxane, a polysilsesquioxane resin or an A-B-A, B-A-B, A-B, (A-B)ₙ and A-graft-B copolymer, wherein A is an organic polymer, B is a siloxane, and n is a positive integer.

4. A method in accordance with claim 3 wherein the copolymer is a copolymer of polydimethylsiloxane and polyethylene or polypropylene.

5. A method according to any preceding claim wherein the plasma treatment comprises oxygen-containing gas plasma treatment.

6. A method according to Claim 5 wherein the substrate is heated during plasma treatment.

7. A method according to Claim 5 or 6 wherein the plasma is pulsed.

8. A method according to Claim 7 wherein the plasma pulse has an on-time of 100 to 1000µs, and an off-time of from 1000 to 2000µs.

9. A method for enhancing the surface barrier, antioxidant and/or the adhesive properties of a substrate surface by forming a coating on the substrate surface according to a method of any preceding Claim.

10. A coated substrate wherein the substrate was coated by a method according to any one of Claims 1 to 9.

11. Use of a coated substrate in accordance with Claim 10 as the substrate for a release coating to form a release liner.

## Patentansprüche

1. Verfahren zur Ausbildung einer Beschichtung, die SiOₓ-Gruppen enthält, auf einer Substratoberfläche durch Plasmabehandlung der Oberfläche, wobei das Substrat eine Mischung aus einem organischen polymeren Material und 25 Gew.-% oder weniger eines organosiliciumhaltigen Additivs, das im Wesentlichen mit dem organischen polymeren Material nicht mischbar ist, enthält, wobei das organosiliciumhaltige Additiv Copolymere aus Siloxanen und organischen Polymeren, Harze, lineare Siloxane der Formel R¹ₐR₃₋ₐSiO-(R¹_{b}R₂₋ _{b}SiO)_{c}SiR₃₋ₐR¹ₐ und cyclische Siloxane der Formel (R¹_{b}R_{2-b}SiO)_{d} umfasst, worin jedes R unabhängig voneinander ausgewählt ist aus Alkylgruppen und substituierten Kohlenwasserstoffgruppen, ausgewählt aus Aminoalkyl-, Epoxyalkyl-, (Meth)acryloxyalkyl-, Isocyanoalkyl-, Trifluoralkyl- und Perfluoralkylgruppen, R¹ eine Alkylgruppe, ein Wasserstoffatom, eine Alkenylgruppe oder eine Hydroxylgruppe ist, a gleich 0 bis 3 ist, b gleich 0 bis 2 ist, c gleich null oder eine ganze Zahl ist und d gleich 3 bis 10 ist.

2. Verfahren nach Anspruch 1, wobei das organische polymere Material ein Polyolefin enthält.

3. Verfahren nach Anspruch 1 oder 2, wobei das organosiliciumhaltige Additiv Polydimethylsiloxan, α,ω-Dihydroxypolydimethylsiloxan, α,ω-Divinylpolydimethylsiloxan, ein Polysilsesquioxanharz oder ein A-B-A,- B-A-B-, A-B-, (A-B)ₙ- und A-Pfropf-B-Copolymer enthält, worin A ein organisches Polymer ist, B ein Siloxan ist und n eine positive ganze Zahl ist.

4. Verfahren nach Anspruch 3, wobei das Copolymer ein Copolymer von Polydimethylsiloxan und Polyethylen oder Polypropylen ist.

5. Verfahren nach einem der vorstehenden Ansprüche, wobei die Plasmabehandlung Plasmabehandlung mit sauerstoffhaltigem Gas umfasst.

6. Verfahren nach Anspruch 5, wobei das Substrat während der Plasmabehandlung erhitzt wird.

7. Verfahren nach Anspruch 5 oder 6, wobei das Plasma gepulst ist.

8. Verfahren nach Anspruch 7, wobei der Plasmapuls eine An-Zeit von 100 bis 1000 µs und eine Aus-Zeit von 1000 bis 2000 µs hat.

9. Verfahren zur Verbesserung der Oberflächensperrschicht-, Antioxidations- und/oder Hafteigenschaften einer Substratoberfläche durch Ausbilden einer Beschichtung auf der Substratoberfläche gemäß dem Verfahren nach einem der vorstehenden Ansprüche.

10. Beschichtetes Substrat, wobei das Substrat gemäß einem Verfahren nach einem der Ansprüche 1 bis 9 beschichtet wurde.

11. Verwendung eines beschichteten Substrats nach Anspruch 10 als Substrat für eine Trennbeschichtung, um eine Trenndeckschicht zu bilden.

## Revendications

1. Procédé de formation d'un revêtement sur la surface d'un substrat, lequel revêtement comprend des groupes SiOₓ par traitement par plasma de la surface, où le substrat comprend un mélange d'une matière polymère organique et de 25 % en masse ou moins d'un additif contenant de l'organosilicium qui est sensiblement non miscible avec la matière polymère organique ; lequel additif contenant de l'organosilicium comprend des copolymères de siloxanes et de polymères organiques, des résines, des siloxanes linéaires de formule R¹ₐR₃₋ₐSiO-(R¹_{b}R_{2-b}SiO)_{c}-SiR₃₋ ₐR¹ₐ et des siloxanes cycliques de formule (R¹_{b}R_{2-b}SiO)_{d} où chaque R est choisi indépendamment parmi les groupes alkyle et les groupes hydrocarbonés substitués choisis parmi les groupes aminoalkyle, époxyalkyle, (méth)acryloxyalkyle, isocyanoalkyle, trifluoroalkyle et perfluoroalkyle, R¹ est un groupe alkyle, un atome d'hydrogène, un groupe alcényle ou un groupe hydroxyle, *a* est 0 à 3, *b* est 0 à 2, *c* est 0 ou un entier, et *d* est 3 à 10.

2. Procédé selon la revendication 1, où la matière polymère organique comprend une polyoléfine.

3. Procédé selon la revendication 1 ou 2, où l'additif contenant de l'organosilicium comprend du polydiméthylsiloxane, de l'α,ω-dihydroxypolydiméthylsiloxane, de l'α,ω-divinylpolydiméthylsiloxane, une résine de polysilsesquioxane ou un copolymère A-B-A, B-A-B, A-B, (A-B)ₙ et A-greffé-B, où A est un polymère organique, B est un siloxane et *n* est un entier positif.

4. Procédé selon la revendication 3, où le copolymère est un copolymère de polydiméthylsiloxane et de polyéthylène ou de polypropylène.

5. Procédé selon l'une quelconque des revendications précédentes, où le traitement par plasma comprend un traitement par plasma dans un gaz contenant de l'oxygène.

6. Procédé selon la revendication 5, où le substrat est chauffé pendant le traitement par plasma.

7. Procédé selon la revendication 5 ou 6, où le plasma est pulsé.

8. Procédé selon la revendication 7, où l'impulsion de plasma a un temps de marche de 100 à 1000 µs et un temps d'arrêt de 1000 à 2000 µs.

9. Procédé pour améliorer les propriétés de barrière de surface, antioxydantes et/ou adhésives de la surface d'un substrat par formation d'un revêtement sur la surface du substrat selon un procédé selon l'une quelconque des revendications précédentes.

10. Substrat revêtu, où le substrat a été revêtu par un procédé selon l'une quelconque des revendications 1 à 9.'

11. Utilisation d'un substrat revêtu selon la revendication 10 comme substrat pour un revêtement de séparation pour former une couche de séparation.
